Europäisches Patentamt

European Patent Office

Office européen des brevets

(11) Publication number: **0 161 807 B1**

# EUROPEAN PATENT SPECIFICATION

(45) Date of publication of patent specification: **09.01.91**

(51) Int. Cl.⁵: **G 11 B 11/10,** G 11 B 7/24

(21) Application number: **85302580.7**

(22) Date of filing: **12.04.85**

(60) Divisional application **88201371 filed on 01.07.88.**

(54) Magneto-optic memory element.

(30) Priority: **13.04.84 JP 75541/84**
**22.05.84 JP 104207/84**

(43) Date of publication of application:
**21.11.85 Bulletin 85/47**

(45) Publication of the grant of the patent:
**09.01.91 Bulletin 91/02**

(84) Designated Contracting States:
**DE FR GB IT**

(56) References cited:
EP-A-0 033 046     EP-A-0 111 988
EP-A-0 063 439     GB-A-2 060 191

XEROX DISCLOSURE JOURNAL, vol. 8, no. 3,
May/June 1983; R.M. FAY et al. "Inexpensive
optical recording media with hermetic seal and
high sensitivity", pages 281-282

PATENT ABSTRACTS OF JAPAN, vol. 6, no. 129,
15th July 1982, page (P-128) (1007); & JP-A-57-
55545 (TOKYO SHIBAURA DENKI) 02-04-1982

(73) Proprietor: **SHARP KABUSHIKI KAISHA**
**22-22 Nagaike-cho Abeno-ku**
**Osaka 545 (JP)**

(72) Inventor: **Ohta, Kenji**
**Shiki Manshon 414 89-1 Oaza-Futamata**
**Yao-shi Osaka-fu (JP)**
Inventor: **Takahashi, Akira**
**2664, 9-1-506 Akishinosatsuki-cho**
**Nara-shi Nara-ken (JP)**
Inventor: **Katayama, Hiroyuki**
**Teramoto Haitsu A101 73 Nimyo-cho**
**Nara-shi Nara-ken (JP)**
Inventor: **Hirogane, Junji**
**2613-1 Ichinomoto-cho**
**Tenri-shi Nara-ken (JP)**
Inventor: **Murakami, Yoshiteru**
**9-16-605 Oohata-cho**
**Nishinomiya-shi Hyogo-ken (JP)**

(74) Representative: **Wright, Peter David John et al**
**R.G.C. Jenkins & Co. 26 Caxton Street**
**London SW1H 0RJ (GB)**

Courier Press, Leamington Spa, England.

## Description

The present invention relates to a magneto-optic memory element on which a laser beam is made to impinge to record, read out or erase information onto or from the magneto-optic memory element.

There has recently been developed a magneto-optic memory element which is used in an optical memory disc storing alterable information. It has been found that the most effective magneto-optic memory element includes a recording medium made of an amorphous alloy thin-film consisting of rare earth metal and transition metal. Such a magneto-optic memory element is generally stable because the recording bits are not affected by grain boundaries, and a large size recording medium can be easily formed.

The engineering group including the inventors of the present invention have discovered that the recording medium is deteriorated when the recording medium is exposed to oxygen or to moisture. In order to protect the recording medium from oxygen and moisture, a magneto-optic memory element has been proposed by this engineering group, wherein the amorphous alloy thin-film recording layer is sandwiched between a pair of transparent dielectric layers. A basic structure of the improved magneto-optic memory element is disclosed in our published European Patent Application No. 0,111,988 A1 (containing prior art falling under Art. 54(3) EPC).

The magneto-optic memory element disclosed in the above-mentioned European Patent Application No. 0,111,988 A1 is useful because the transparent dielectric layers function to effectively combine the Kerr effect and the Faraday effect so as to increase the Kerr rotation angle. However, in the magneto-optic memory element disclosed in that Application, there is a possibility that the amorphous alloy thin-film recording layer is damaged due to the oxidation caused by the SiO or $SiO_2$ dielectric layer. In order to further improve the magneto-optic memory element, the engineering group including the inventors of the present invention have proposed a magneto-optic memory element, wherein an amorphous alloy thin-film recording layer is sandwiched between a pair of transparent nitride films. A typical structure of this magneto-optic memory element is disclosed in published European Patent Application No. 0,139,474 (containing prior art falling under Art. 54(3) EPC).

The nitride film effectively protects the amorphous alloy thin-film recording layer from oxygen and moisture at the centre portion thereof. However, the periphery of the element includes a bare recording layer at the edge of the element. Thus, there is a possibility that the amorphous alloy thin-film recording layer is deteriorated from the periphery thereof in the magneto-optic memory element disclosed in the European Application No. 0,139,474. Furthermore, in that Application No. 0,139,474 an Al reflection layer is provided so as to enhance the S/N ratio in the reproduced signal by increasing the photoelectric-magnetic effects (combined Kerr effect and Faraday effect). However, there is a possibility of the formation of turbidity in the Al reflection film during the formation of the Al reflection film. Such turbidity reduces the reflection factor.

In Xerox Disclosure Journal, Vol 8, No. 3, page 281 there is disclosed an optical recording disc which is of the type having a tellurium writing medium layer. To eliminate problems of oxidation of the writing medium and of disc radial runout layers of $SiO_2$ are provided on both sides of the tellurium layer. The edges of the tellurium layer, which do not reach the disc edge, are sealed by the $SiO_2$ overcoating. The edges of a spin coated PMMA layer immediately beneath the tellurium layer are also sealed by the $SiO_2$ overcoating.

The present invention seeks to improve stability of operation in a magneto-optical memory element and in particular seeks to provide complete protection of the recording layer from both oxygen and moisture.

According to one aspect of the present invention there is provided a magneto-optical memory element comprising a transparent substrate, a magneto-optical recording layer mounted on the substrate a, first transparent dielectric layer between the substrate and the recording layer, a second transparent dielectric layer on the side of the recording layer remote from the substrate, and a reflection layer on the side of said second transparent dielectric layer remote from said recording layer the first and second transparent dielectric layers being substantially oxygen-proof so as to protect their respective sides of the recording layer from oxygen, the circumferential edge of said recording layer being sealed off from the exterior of the element, characterised in that said reflection layer is both oxygen-proof and moisture-proof, said first and second dielectric layers are made of a nitride material and are also substantially moisture-proof so as to protect their respective sides of the recording layer from moisture, and in that the sealing of said circumferential edge is provided by a protective layer disposed around said circumferential edge of the recording medium, said protective layer being both oxygen and moisture-proof.

According to another aspect of the present invention there is provided a magneto-optical memory element comprising a substrate, a magneto-optical recording layer mounted on the substrate, a first transparent dielectric layer between the substrate and the recording layer and second transparent dielectric layer on the side of the recording layer remote from the substrate, the first and second transparent dielectric layers being substantially oxygen-proof so as to protect their respective sides of the recording layer from oxygen, the circumferential edge of said recording layer being sealed off from the exterior of the element, and said first and second transparent dielectric layers both extending beyond said circumferential edge of the recording layer,

2

characterised in that said transparent dielectric layers are made of the same nitride material and in that their extended portions are fixed in mutual contact to seal said circumferential edge.

According to a further aspect of the present invention there is provided a magneto-optical memory element comprising a substrate, a magneto-optical recording layer mounted on the substrate, a first transparent dielectric layer between the substrate and the recording layer and a second transparent dielectric layer on the side of the recording layer remote from the substrate, the first and second transparent dielectric layers being substantially oxygen-proof so as to protect their respective sides of the recording layer from oxygen, the circumferential edge of said recording layer being sealed off from the exterior of the element, and a reflection layer formed on the side of the second transparent dielectric layer remote from said recording layer, characterised in that the reflection layer is extended beyond said circumferential edge, the extended portion covering said circumferential edge so as to seal it.

Brief Description of the Drawings

The present invention will be better understood from the detailed description given hereinbelow and the accompanying drawings which are given by way of illustration only, and thus are not limitative of the present invention and wherein:

FIGURE 1 is a sectional view of an essential part of an embodiment of a magneto-optic memory element of the present invention;

FIGURE 2 is a sectional view of an essential part of another embodiment of a magneto-optic memory element of the present invention;

FIGURE 3 is a sectional view of an essential part of still another embodiment of a magneto-optic memory element of the present invention; and

FIGURE 4 is a sectional view of an essential part of a further embodiment of a magneto-optic memory element of the present invention.

Description of the Preferred Embodiments

A magneto-optic memory element of the present invention includes a transparent substrate 10, and a pair of transparent dielectric layers 12 and 14. Each of the transparent dielectric layers is a moisture-proof and oxygen-proof film such as an AlN film or a $Si_3N_4$ film. An amorphous alloy thin-film recording layer 16, for example, an alloy film of the rare earth metal and the transition metal, is sandwiched between the pair of transparent dielectric layers 12 and 14. A reflection film 18 is formed on the transparent dielectric layer 14, the transparent dielectric layer 14 and the reflection film 18 functioning, in combination, to enhance the photoelectric-magnetic effects (combined Kerr effect and Faraday effect). The peripheries of the pair of transparent dielectric layers 12 and 14 are extended so that the transparent dielectric layers 12 and 14 are larger than the amorphous alloy thin-film recording layer 16. That is, the periphery of the amorphous alloy thin-film recording layer 16 is sealed by the pair of transparent dielectric layers 12 and 14. More specifically, peripheries 120 and 140 of the transparent dielectric layers 12 and 14 function, in combination, to protect a periphery 160 of the amorphous alloy thin-film recording layer 16 from the moisture and oxygen. If the both transparent dielectric layers 12 and 14 are formed from the same material such as a nitride film, the boundary is tightly fixed by the pair of transparent dielectric layers 12 and 14 at the peripheries thereof.

The structure of the magneto-optic memory element of the present invention is applicable to an element of which the transparent substrate 10 is made of either one of a glass substrate or a moisture permeable resin substrate such as an acrylic resin substrate or a polycarbonate substrate.

The magneto-optic memory element of the above-mentioned structure shows a stable operation, and the element, even at the periphery thereof, is not damaged after the high temperature and the high humidity test carried out in the condition of temperature of 60°C, and the humidity of 95%.

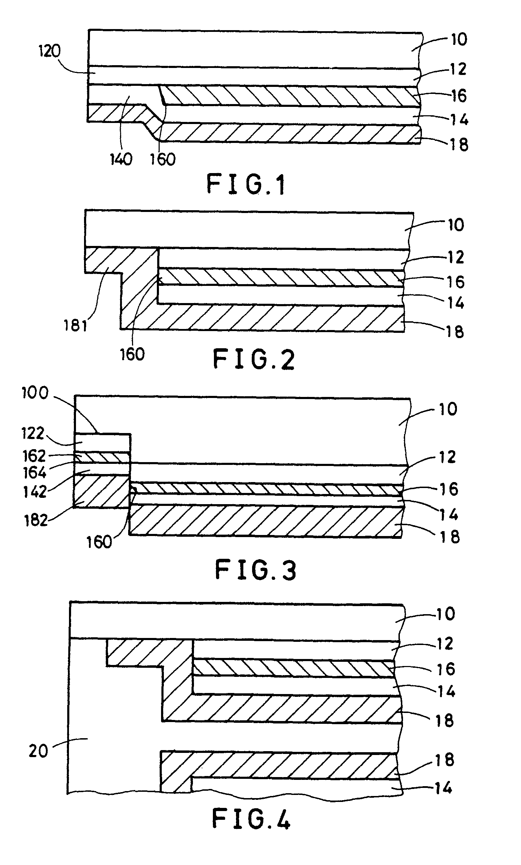

FIGURE 2 shows another embodiment of the magneto-optic memory element of the present invention. Like elements corresponding to those of FIGURE 1 are indicated by like numerals.

The transparent substrate 10 has a size larger than the pair of transparent dielectric layers 12 and 14, preferably made of a pair of AlN films, and the amorphous alloy thin-film recording layer 16, preferably made of a thin-film alloy of the rare earth element and the transition metal such as GdNdFe, TbFe or TbFeCo. The moisture-proof and oxygen-proof reflection film 18 such as an Al film, Ni film, Cr film or a stainless steel film, is disposed on the transparent dielectric film 14 so that the reflection film 18 is extended (181) to cover the periphery 160 of the amorphous alloy thin-film recording layer 16. The reflection film 18 is fixed to the transparent substrate 10 at the periphery 181 thereof.

FIGURE 3 shows still another embodiment of the magneto-optic memory element of the present invention. Like elements corresponding to those of FIGURE 1 are indicated by like numerals.

The transparent substrate 10 is provided with a cut-away portion 100 at the periphery thereof. The cut-away portion 100 has a depth of about 120 nm. The transparent dielectric layer 12 (and 122), which does not contain oxygen, and is preferably an AlN film, is formed on the transparent substrate 10 (and 100) to have a thickness of about 100 nm. Then, the amorphous alloy thin-film recording layer 16 (and 162), preferably a GdTbFe film, is formed on the transparent dielectric layer 12 (and 122) to have a thickness of about 20 nm. The transparent dielectric layer 14 (and 142), which does not include oxygen, and is preferably an AlN film, is formed on the amorphous alloy thin-film recording layer 16 (and 162) to have a thickness of about 50 nm. Then, the reflection film 18 (and 182) is formed on the transparent dielectric layer 14 (and 142) to have a thickness of about 150 nm. The periphery of each layer (122, 162, 142 and 182) follows the cut-away portion 100. The edge 164 of the amorphous alloy thin-film recording layer 162 may be damaged by the atmosphere. However, the edge 160 of the amorphous alloy thin-film recording layer 16 is protected by the reflection film 182. If the periphery portion 162 is not used as the actual recording area, the magneto-optic memory element of FIGURE 3 ensures a stable operation.

FIGURE 4 shows a further embodiment of the magneto-optic memory element of the present invention. Like elements corresponding to those of FIGURE 1 are indicated by like numerals.

Two magneto-optic memory elements, each having the similar structure as the element shown in FIGURE 2, are fixed to each other through the use of an adhesive 20 such as a photopolymer, in a manner that the transparent substrates 10 face the atmosphere, and the reflection films 18 confront each other.

As already discussed in the published European Patent Application No 0 139 474, the reflection film 18 must have a high index of reflection to obtain the large apparent Kerr rotation angle. Normally, the magneto-optic memory element is formed by the sputtering method. Since aluminum is stable and is commercial available, the aluminum film is most widely used as the reflection film in the magneto-optic memory element. However, there is a possibility that the turbidity is formed in the Al reflection film during the formation of the Al reflection film in the conventional element. The present inventors have discovered that a clean Al reflection film is obtained under a predetermined manufacturing condition or when the material of the reflection film is properly selected. Following is a preferred example wherein the clean reflection film is formed.

The transparent substrate 10 is either a glass substrate, a polycarbonate substrate, or an acrylic resin substrate. The transparent dielectric layer 12 is preferably a transparent AIN film having a thickness of about 100 nm. The amorphous alloy thin-film recording layer 16 is a GdTbFe film having a thickness of about 27 nm. The second transparent dielectric layer 14 is an AIN film having a thickness of about 35 nm. The reflection film 18 is an alloy film including aluminium (Al) and nickel (Ni). The Al-Ni alloy film is formed by sputtering a target of Aluminium (Al) to which Nickel (Ni) is added. The Al-Ni reflection film preferably has a thickness greater than 60 nm.

The Al-Ni reflection film 18 does not include turbidity even though the reflection film 18 is formed on the AIN dielectric layer 14. The Al-Ni reflection film 18 is oxygen-proof and water-proof and, therefore, the Al-Ni reflection film is suited for ensuring a stable operation of the magneto-optic memory element. Of course, the index of reflection is high enough to produce a large apparent Kerr rotation angle. A preferred reflection film can be formed by the sputtering method with the target of aluminium (Al) to which either nickel (Ni), palladium (Pd) or platinum (Pt) is added.

Reference is hereby directed to copending published European Patent Application No. 0297689, which is divided from this present application, and in which the invention is directed to the avoidance of turbidity in the reflective layer in the manner disclosed herein even when moisture and oxygen-proof dielectric layers are not used. The invention in that divisional application provides a magneto-optical memory element having a magneto-optic recording layer and a reflection layer, the reflection layer including a turbidity reducing substance. In this aspect, the reflection layer preferably comprises Al with the inclusion of Ni, Pd or Pt.

**Claims**

1. A magneto-optic memory element comprising a transparent substrate (10), a magneto-optical recording layer (16) mounted on the substrate (10), a first transparent dielectric layer (12) between the substrate and the recording layer, a second transparent dielectric layer (14) on the side of the recording layer remote from the substrate, and a reflection layer on the side of said second transparent dielectric layer remote from said recording layer the first and second transparent dielectric layers being substantially oxygen-proof so as to protect their respective sides of the recording layer (16) from oxygen, the circumferential edge (160) of said recording layer being sealed off from the exterior of the element, characterised in that said reflection layer is both oxygen-proof and moisture-proof, said first and second dielectric layers (12, 14) are made of a nitride material and are also substantially moisture-proof so as to protect their respective sides of the recording layer (16) from moisture, and in that the sealing of said circumferential edge is provided by a protective layer (140) disposed around said circumferential edge (160) of the recording medium, said protective layer being both oxygen and moisture-proof.

2. A magneto-optical memory element according to claim 1 wherein said reflection layer (18) comprises aluminium (Al) and an element for inhibiting the formation of turbidity in the reflection layer.

3. A magneto-optic memory element according to claim 2 wherein said element is Ni, Pd or Pt.

4. A magneto-optic memory element according to claim 3 wherein said reflection layer comprises an Al-Ni alloy film.

5. A magneto-optic memory element according to claim 4, wherein said Al-Ni alloy film is formed by a sputtering method with a target of aluminium (Al) and added nickel (Ni).

6. A magneto-optical memory element according to any preceding claim wherein said recording layer comprises a thin alloy film formed on said first transparent dielectric layer (12).

7. A magneto-optical memory element according to any preceding claim wherein the reflection layer (18) is extended beyond said circumferential edge (160), the extended portion (181; 182) covering said circumferential edge (160) so as to constitute said protective layer (140).

8. A magneto-optical memory element according to claim 7 wherein said extended portion (181) of said reflection layer also extends beyond and covers peripheral edges of said first and second transparent dielectric layers.

9. A magneto-optical memory element according to claim 7 wherein said substrate is formed with a peripheral cut-away portion, or rebate (100), and wherein each of said recording (16), dielectric (12, 14) and reflection (18) layers has an outer peripheral portion (122, 142, 162, 182) disposed over said rebate and beyond said peripheral edge (160) of the recording layer (16), and displaced in a direction transverse to the layers relative to the main central portions thereof, the outer peripheral portion (182) of the reflection layer (18) covering said peripheral edge (160) of the recording layer.

10. A magneto-optical memory element according to any of claims 1 to 6 wherein at least one of said first and second transparent dielectric layers is extended to have a size larger than said recording layer, the extended portion covering said circumferential edge of said recording layer so as to constitute said protective layer (140).

11. A magneto-optical memory element according to claim 10 wherein said first and second transparent dielectric layers are formed from the same material, and both extend beyond said circumferential edge of the recording layer, the extended portions (120, 140) being fixed in mutual contact to seal said circumferential edge (160).

12. A magneto-optical memory element comprising a substrate (10), a magneto-optical recording layer (16) mounted on the substrate (10), a first transparent dielectric layer (12) between the substrate and the recording layer and second transparent dielectric layer (14) on the side of the recording layer remote from the substrate, the first and second transparent dielectric layers being substantially oxygen-proof so as to protect their respective sides of the recording layer (16) from oxygen, the circumferential edge (160) of said recording layer being sealed off from the exterior of the element, and said first and second transparent dielectric layers both extending beyond said circumferential edge of the recording layer, characterised in that said transparent dielectric layers (12, 14) are made of the same nitride material and in that their extended portions (120; 140) are fixed in mutual contact to seal said circumferential edge (160).

13. A magneto-optical memory element according to claim 12 wherein said substrate is a transparent substrate and wherein there is also provided a reflection layer (18) formed on the side of said second transparent dielectric layer remote from said recording layer.

14. A magneto-optical memory element according to claim 13 wherein said reflection layer (18) comprises aluminium (Al) and an element for inhibiting the formation of turbidity in the reflection layer.

15. A magneto-optical memory element according to claim 14 wherein said element is Ni, Pd or Pt.

16. A magneto-optical memory element according to claim 15 wherein said reflection layer comprises an Al-Ni alloy film.

17. A magneto-optical memory element according to claim 16 wherein said Al-Ni alloy film is formed by a sputtering method with a target of aluminium (Al) and added nickel (Ni).

18. A magneto-optical memory element comprising a substrate (10), a magneto-optical recording layer (16) mounted on the substrate (10), a first transparent dielectric layer (12) between the substrate and the recording layer and a second transparent dielectric layer (14) on the side of the recording layer remote from the substrate, the first and second transparent dielectric layers being substantially oxygen-proof so as to protect their respective sides of the recording layer (16) from oxygen, the circumferential edge (160) of said recording layer being sealed off from the exterior of the element, and a reflection layer (18) formed on the side of the second transparent dielectric layer (14) remote from said recording layer (16), characterised in that the reflection layer is extended beyond said circumferential edge, the extended portion (181; 182) covering said circumferential edge so as to seal it.

19. A magneto-optical memory element according to claim 18, wherein said extended portion (181) of said reflection layer also extends beyond and covers peripheral edges of said first and second transparent dielectric layers.

20. A magneto-optical memory element according to claim 18 wherein said substrate is formed with a peripheral cut-away portion, or rebate (100), and wherein each of said recording (16), dielectric (12, 14) and reflection (18) layers has an outer peripheral portion (122, 142, 162, 182) disposed over said rebate and beyond said peripheral edge (160) of the recording layer (16), and displaced in a direction transverse to the layers relative to the main central portions thereof, the outer peripheral portion (182) of the reflection layer (18) covering said peripheral edge (160) of the recording layer.

21. A magneto-optical memory element according to any of claims 18 to 20 wherein said reflection layer (18) comprises aluminium (Al) and an element for inhibiting the formation of turbidity in the reflection layer.

22. A magneto-optical memory element according to claim 21, wherein said element is Ni, Pd or Pt.

23. A magneto-optical memory element according to claim 22, wherein said reflection layer comprises an Al-Ni alloy film.

24. A magneto-optical memory element according to claim 23, wherein said Al-Ni alloy film is formed by a sputtering method with a target of aluminium (Al) and added nickel (Ni).

25. A magneto-optical memory element according to any preceding claim wherein said magneto-optical recording layer comprises an amorphous alloy thin film.

26. A magneto-optical memory element according to claim 25 wherein said amorphous alloy of a rare earth metal and a transition metal.

27. A magneto-optical memory element according to claim 26 wherein said alloy is GdTbFe.

**Patentansprüche**

1. Magneto-optisches Speicherelement mit einem durchsichtigen Substrat (10), einer magneto-optischen Aufzeichnungsschicht (16), die auf dem Substrat (10) ausgebildet ist, mit einer ersten durchsichtigen dielektrischen Schicht (12) zwischen dem Substrat und der Aufzeichnungsschicht, mit einer zweiten durchsichtigen dielektrischen Schicht (14) auf der von dem Substrat abgewandten Seite der Aufzeichnungsschicht, und mit einer Reflexionsschicht auf der von der Aufzeichnungsschicht abgewandten Seite der zweiten durchsichtigen dielektrischen Schicht, wobei die erste und zweite durchsichtige dielektrische Schicht im wesentlichen sauerstoffdicht sind, um so die jeweiligen Seiten der Aufzeichnungsschicht (16) gegen Sauerstoff zu schützen, wobei die seitliche Umfangskante (160) der Aufzeichnungsschicht gegen das Äußere des Speicherelements abgedichtet ist, dadurch gekennzeichnet, daß die Reflexionsschicht sowohl sauerstoffdicht als auch feuchtigkeitsdicht ist, daß die erste und zweite dielektrische Schicht (12, 14) aus einem Nitrid-Material hergestellt und ebenfalls im wesentlichen feuchtigkeitsdicht sind, um so die jeweilige Seite der Aufzeichnungsschicht (16) gegen Feuchtigkeit zu schützen, und daß die Abdichtung der seitlichen Umfangskante durch eine Schutzschicht (140) erreicht wird, die an der seitlichen Umfangskante (160) der Aufzeichnungsschicht angeordnet ist, wobei die Schutzschicht sowohl sauerstoff- als auch feuchtigkeitsdicht ist.

2. Magneto-optisches Speicherelement nach Anspruch 1, wobei die Reflexionsschicht (18) Aluminium (Al) und ein Element enthält, das die Bildung von Trübungen in der Reflexionsschicht verhindert.

3. Magneto-optisches Speicherelement nach Anspruch 2, wobei das Element Ni, Pd oder Pt ist.

4. Magneto-optisches Speicherelement nach Anspruch 3, wobei die Reflexionsschicht eine Al-Ni Legierungsschicht enthält.

5. Magneto-optisches Speicherelement nach Anspruch 4, wobei die Al-Ni Legierungsschicht durch ein Vakuumbedampfungsverfahren mit einem Target aus Aluminium (Al) und zugefügtem Nickel (Ni) gebildet ist.

6. Magneto-optisches Speicherelement nach einem der vorhergehenden Ansprüche, wobei die Aufzeichnungsschicht eine dünne Legierungsschicht enthält, die auf der ersten durchsichtigen dielektrischen Schicht (12) gebildet ist.

7. Magneto-optisches Speicherelement nach einem der vorhergehenden Ansprüche, wobei die Reflexionsschicht (18) über die seitliche Umfangskante (160) hinaus erweitert ist, wobei der Erweiterungsbereich (181, 182) die seitliche Umfangskante (160) überdeckt, um so die Schutzschicht (140) zu bilden.

8. Magneto-optisches Speicherelement nach Anspruch 7, wobei der Erweiterungsbereich (181) der Reflexionsschicht auch über die seitlichen Kanten der ersten und zweiten durchsichtigen dielektrischen Schichten hinausreicht und diese überdeckt.

9. Magneto-optisches Speicherelement nach Anspruch 7, wobei das Substrat am äußeren Umfang mit einer Aussparung oder Nut (100) versehen ist, und wobei jede der Aufzeichnungsschicht (16), der dielektrischen Schichten (12, 14) und der Reflexionsschicht (18) einen äußeren Umfangsabschnitt (122, 142, 162, 182) aufweist, der oberhalb der Nut liegt und über die seitliche Umfangskante (160) der Aufzeichnungsschicht (16) hinausreicht und der senkrecht versetzt gegen die horizontale Lage des zugehörigen zentralen Teils ist, wobei der äußere Umfangsabschnitt (182) der Reflexionsschicht (18) die seitliche Umfangskante (160) der Aufzeichnungsschicht überdeckt.

10. Magneto-optisches Speicherelement nach einem der Ansprüche 1 bis 6, wobei wenigstens eine der ersten und zweiten durchsichtigen dielektrischen Schichten zu einer über die Aufzeichnungsschicht hinausreichende Größe erweitert ist, wobei der Erweiterungsbereich die seitliche Umfangskante der Aufzeichnungsschicht überdeckt, um so die Schutzschicht (140) zu bilden.

11. Magneto-optisches Speicherelement nach Anspruch 10, wobei die erste und zweite durchsichtige dielektrische Schicht aus dem gleichen Material hergestellt sind, und wobei beide über die seitliche Umfangskante der Aufzeichnungsschicht hinausreichen, wobei die Erweiterungsbereiche (120, 140) in gegenseitigem Kontakt aneinander befestigt sind, um so die seitliche Umfangskante (160) abzudichten.

12. Magneto-optisches Speicherelement mit einem Substrat (10) einer magneto-optischen Aufzeichnungsschicht (16), die auf dem Substrat (10) ausgebildet ist, mit einer ersten durchsichtigen dielektrischen Schicht (12) zwischen dem Substrat und der Aufzeichnungsschicht und einer zweiten durchsichtigen dielektrischen Schicht (14) auf der von dem Substrat abgewandten Seite der Aufzeichnungsschicht, wobei die erste und zweite durchsichtige dielektrische Schicht im wesentlichen sauerstoffdicht sind, um so die jeweiligen Seiten der Aufzeichnungsschicht (16) gegen Sauerstoff zu schützen, wobei die seitliche Umfangskante (160) der Aufzeichnungsschicht gegen das Äußere des Speicherelements abgedichtet ist, und wobei die erste und zweite durchsichtige dielektrische Schicht beide über die seitliche Umfangskante der Aufzeichnungsschicht hinausreichen, dadurch gekennzeichnet, daß die durchsichtigen dielektrischen Schichten (12, 14) aus dem gleichen Nitrid-Material hergestellt sind und daß ihre Erweiterungsbereiche (120, 140) in gegenseitigem Kontakt aneinander befestigt sind, um die seitliche Umfangskante (160) abzudichten.

13. Magneto-optisches Speicherelement nach Anspruch 12, wobei das Substrat durchsichtig ist und wobei eine Reflexionsschicht (18) vorgesehen ist, die auf der von der Aufzeichnungsschicht abgewandten Seite der zweiten durchsichtigen dielektrischen Schicht gebildet ist.

14. Magneto-optisches Speicherelement nach Anspruch 13, wobei die Reflexionsschicht (18) Aluminium (Al) und ein Element enthält, daß die Bildung von Trübungen in der Reflexionsschicht verhindert.

15. Magneto-optisches Speicherelement nach Anspruch 14, wobei das Element Ni, Pd oder Pt ist.

16. Magneto-optisches Speicherelement nach Anspruch 15, wobei die Reflexionsschicht eine Al-Ni Legierungsschicht enthält.

17. Magneto-optisches Speicherelement nach Anspruch 16, wobei die Al-Ni Legierungsschicht durch ein Vakuumbedampfungsverfahren mit einem Target aus Aluminium (Al) und zugefügtem Nickel (Ni) gebildet ist.

18. Magneto-optisches Speicherelement mit einem Substrat (10), einer magneto-optischen Aufzeichnungsschicht (16), die auf dem Substrat (10) ausgebildet ist, mit einer ersten durchsichtigen dielektrischen Schicht (12) zwischen dem Substrat und der Aufzeichnungsschicht und einer zweiten durchsichtigen dielektrischen Schicht (14) auf der von dem Substrat abgewandten Seite der Aufzeichnungsschicht, wobei die erste und zweite durchsichtige dielektrische Schicht im wesentlichen sauerstoffdicht sind, um so die jeweiligen Seiten der Aufzeichnungsschicht (16) gegen Sauerstoff zu schützen, wobei die seitliche Umfangskante (160) der Aufzeichnungsschicht gegen das Äußere des Speicherelements abgedichtet ist, und wobei eine Reflexionsschicht (18) auf der von der Aufzeichnungsschicht (16) abgewandten Seite der zweiten durchsichtigen dielektrischen Schicht (14) ausgebildet ist, dadurch gekennzeichnet, daß die Reflexionsschicht über die seitliche Umfangskante hinaus erweitert ist, wobei der Erweiterungsbereich (181, 182) die seitliche Umfangskante überdeckt, um sie so abzudichten.

19. Magneto-optisches Speicherelement nach Anspruch 18, wobei der Erweiterungsbereich (181) der Reflexionsschicht auch über die seitliche Kante der ersten und zweiten durchsichtigen dielektrischen Schicht hinausreicht und diese überdeckt.

20. Magneto-optisches Speicherelement nach Anspruch 18, wobei das Substrat am äußeren Umfang mit einer Aussparung oder Nut (100) versehen ist, und wobei jede der Aufzeichnungsschicht (16), der dielektrischen Schichten (12, 14) und der Reflexionsschicht (18) einen äußeren Umfangsbereich (122, 142, 162, 182) aufweist, der oberhalb der Nut liegt und über die seitliche Umfangskante (160) der Aufzeichnungsschicht (16) hinausreicht, und der senkrecht versetzt gegen die horizontale Lage des zugehörigen zentralen Teils ist, wobei der äußere Umfangsbereich (182) der Reflexionsschicht (18) die seitliche Umfangskante (160) der Aufzeichnungsschicht überdeckt.

21. Magneto-optisches Speicherelement nach einem der Ansprüche 18 bis 20, wobei die Reflexionsschicht (18) Aluminium (Al) und ein Element enthält, das die Bildung von Trübungen in der Reflexionsschicht verhindert.

22. Magneto-optisches Speicherelement nach Anspruch 21, wobei das Element Ni, Pd oder Pt ist.

23. Magneto-optisches Speicherelement nach Anspruch 22, wobei die Reflexionsschicht eine Al-Ni Legierungsschicht enthält.

24. Magneto-optisches Speicherelement nach Anspruch 23, wobei die Al-Ni Legierungsschicht durch ein Vakuumbedampfungsverfahren mit einem Target aus Aluminium (Al) und zugefügtem Nickel (Ni) gebildet ist.

25. Magneto-optisches Speicherelement nach einem der vorhergehenden Ansprüche, wobei die magneto-optische Aufzeichnungsschicht eine amorphe Legierungsschicht aufweist.

26. Magneto-optisches Speicherelement nach Anspruch 25, wobei die amorphe Legierung eine Legierung aus einem Metall der Seltenen Erden und einem Übergangsmetall ist.

27. Magneto-optisches Speicherelement nach Anspruch 26, wobei die Legierung GdTbFe ist.

**Revendications**

1. Un élément de mémoire magnéto-optique comprenant un substrat transparent (10), une couche d'enregistrement magnéto-optique (16) montée sur le substrat (10), une première couche transparente diélectrique (12) entre le substrat et la couche d'enregistrement, une deuxième couche transparente diélectrique (14) sur le côté de la couche d'enregistrement éloigné du substrat, et une couche de réflexion sur le côté de ladite deuxième couche transparente diélectrique éloignée de ladite couche d'enregistrement, les première et deuxième couches diélectriques transparentes étant sensiblement imperméables à l'oxygène de façon à protéger de l'oxygène leurs faces respectives de la couche d'enregistrement (16), le bord circonférentiel (160) de ladite couche d'enregistrement étant abrité de façon étanche de l'extérieur de l'élément, caractérisé en ce que ladite couche de réflexion est à la fois imperméable à l'oxygène et imperméable à l'humidité, lesdites première et deuxième couches diélectriques (12, 14) sont constituées d'une matière en nitrure et sont sensiblement imperméables à l'humidité de façon à protéger de l'humidité leurs faces respectives de la couche d'enregistrement (16), et en ce que l'étanchéité dudit bord circonférentiel est réalisée par une couche protectrice (140) disposée autour dudit bord circonférentiel (160) du milieu d'enregistrement, ladite couche protrectrice étant à la fois imperméable à l'oxygène et à l'humidité.

2. Un élément de mémoire magnéto-optique selon la revendication 1 dans lequel ladite couche de réflexion (18) comprend de l'aluminium (Al) et un élément destiné à empêcher l'apparition d'un aspect trouble dans la couche de réflexion.

3. Un élément de mémoire magnéto-optique selon la revendication 2 dans lequel ledit élément est Ni, Pd ou Pt.

4. Un élément de mémoire magnéto-optique selon la revendication 3 dans lequel ladite couche de réflexion comprend une pellicule d'alliage Al-Ni.

5. Un élément de mémoire magnéto-optique selon la revendication 4, dans lequel la pellicule d'alliage Al-Ni est formée par un procédé de pulvérisation cathodique avec une cible en aluminium (Al) et additionnée de nickel (Ni).

6. Un élément de mémoire magnéto-optique selon une revendication précédente quelconque dans lequel ladite couche d'enregistrement comprend une fine pellicule d'alliage formée sur ladite première couche diélectrique transparente (12).

7. Un élément de mémoire magnéto-optique selon une revendication précédente quelconque dans lequel la couche de réflexion (10) est prolongée au-delà dudit bord circonférentiel (160), la partie prolongée (181; 182) couvrant ledit bord circonférentiel (160) de façon à constituer ladite couche protectrice (140).

8. Un élément de mémoire magnéto-optique selon la revendication 7 dans lequel ladite partie prolongée (181) de ladite couche de réflexion se prolonge aussi au-delà et couvre les bords périphériques desdites première et deuxième couches diélectriques transparentes.

9. Un élément de mémoire magnéto-optique selon la revendication 7 dans lequel ledit substrat comporte une partie périphérique découpée, ou degré (100), et dans lequel chacune desdites couches d'enregistrement (16), diélectriques (12, 14) et de réflexion (18) possède une partie extérieure périphérique (122, 142, 162, 182) disposée au-dessus dudit degré et au-delà du bord périphérique (160) de la couche d'enregistrement (16), et déplacé dans une direction transversale aux couches relativement à leurs parties centrales principales, la partie périphérique extérieure (182) de la couche de réflexion (18) recouvrant ledit bord périphérique (160) de la couche d'enregistrement.

10. Un élément de mémoire magnéto-optique selon l'une quelconque des revendications 1 à 6, dans lequel au moins l'une desdites première et deuxième couches diélectriques transparentes est prolongée pour présenter une dimension plus grande que ladite couche d'enregistrement, la partie prolongée recouvrant ledit bord circonférentiel de ladite couche d'enregistrement de façon à constituer ladite couche protectrice (140).

11. Un élément de mémoire magnéto-optique selon la revendication 10 dans lequel lesdites première et deuxième couches diélectriques transparentes sont formées de la même matière, et se prolongent toutes les deux au-delà dudit bord circonférentiel de la couche d'enregistrement, les parties prolongées (120, 140) étant fixées en contact mutuel pour assurer l'étanchéité autour dudit bord circonférentiel (160).

12. Un élément de mémoire magnéto-optique comprenant un substrat (10), une couche d'enregistrement magnéto-optique (16) montée sur le substrat (10), une première couche diélectrique transparente (12) entre le substrat et la couche d'enregistrement et une deuxième couche diélectrique transparente (14) sur le côté de la couche d'enregistrement éloigné du substrat, les première et deuxième couches diélectriques transparentes étant sensiblement imperméables à l'oxygène de façon à protéger de l'oxygène leurs côtés respectifs de la couche d'enregistrement (16), le bord circonférentiel (160) de ladite couche d'enregistrement étant rendu étanche vis-à-vis de l'extérieur de l'élément et lesdites première et deuxième couches diélectriques transparentes se prolongeant toutes deux au-delà dudit bord circonférentiel de la couche d'enregistrement, caractérisé en ce que lesdites couches diélectriques transparentes (12, 14) sont constituées de la même matière en nitrure et en ce que leurs parties prolongées (120, 140) sont fixées en contact mutuel pour réaliser l'étanchéité dudit bord circonferentiel (160).

13. Un élément de mémoire magnéto-optique selon la revendication 12 dans lequel ledit substrat est un substrat transparent et dans lequel il existe également une couche de réflexion (18) formée sur le côté de ladite deuxième couche diélectrique transparente éloigné de ladite couche d'enregistrement.

14. Un élément de mémoire magnéto-optique selon la revendication 13 dans lequel ladite couche de réfléxion (18) comprend de l'aluminium (Al) et un élément destiné à empêcher l'apparition d'un aspect trouble dans la couche de réflexion.

15. Un élément de mémoire magnéto-optique selon la revendication 14 dans lequel ledit élément est Ni, Pd ou Pt.

16. Un élément de mémoire magnéto-optique selon la revendication 15 dans lequel ladite couche de réflexion comprend une pellicule d'alliage Al-Ni.

17. Un élément de mémoire magnéto-optique selon la revendication 16, dans lequel la couche d'alliage Al-Ni est formée par un procédé de pulvérisation cathodique avec une cible en aluminium (Al) et additionnée de nickel (Ni).

18. Un élément de mémoire magneto-optique comprenant un substrat (10), une couche d'enregistrement magnéto-optique (16) montée sur le substrat (10), une première couche diélectrique transparente (12) entre le substrat et la couche d'enregistrement et une deuxième couche diélectrique transparente (14) sur le côté de la couche d'enregistrement éloigné du substrat, les première et deuxième couches diélectriques transparentes étant sensiblement imperméables à l'oxygène de façon à protéger de l'oxygène leurs côtés respectifs de la couche d'enregistrement (16), le bord circonférentiel (160) de ladite couche d'enregistrement étant rendu étanche vis-à-vis de l'extérieur de l'élément, et une couche de réflexion (18) formée sur le côté de la deuxième couche diélectrique transparente (14) éloigné de ladite couche d'enregistrement (16), caractérisé en ce que la couche de réflexion se prolonge au-delà dudit bord circonférentiel, la partie prolongée (180; 182) couvrant ledit bord circonférentiel de façon à le rendre étanche.

19. Un élément de mémoire magnéto-optique selon la revendication 18, dans lequel ladite partie prolongée (181) de ladite couche de réflexion se prolonge aussi au-delà et couvre les bords périphériques desdites première et deuxième couches diélectriques transparentes.

20. Un élément de mémoire magnéto-optique selon la revendication 18 dans lequel ledit substrat est formé d'une partie périphérique découpée, ou degré (100), et dans lequel chacune desdites couches d'enregistrement (16), diélectriques (12, 14) et de réflexion (18) possède une partie extérieure périphérique (122, 142, 162, 182) disposée au-dessus dudit degré et au-delà dudit bord périphérique (160) de la couche d'enregistrement (16), et déplacée dans une direction transversale aux couches par rapport à leurs parties centrales principales, la partie périphérique extérieure (182) de la couche de réflexion (18) couvrant ledit bord circonférentiel (160) de la couche d'enregistrement.

21. Un élément de mémoire magnéto-optique selon l'une quelconque des revendications 18 à 20 dans lequel ladite couche de réflexion (18) comprend de l'aluminium (Al) et un élément pour empêcher l'apparition d'un aspect trouble dans la couche de réflexion.

22. Un élément de mémoire magnéto-optique selon la revendication 21, dans lequel ledit élément est Ni, Pd ou Pt.

23. Un élément de mémoire magnéto-optique selon la revendication 22, dans lequel ladite couche de réflexion comprend une pellicule d'alliage Al-Ni.

24. Un élément de mémoire magnéto-optique selon la revendication 23, dans lequel ladite pellicule d'alliage Al-Ni est formée par un procédé de pulvérisation cathodique à l'aide d'une cible en aluminium (Al) et additionnée de nickel (Ni).

25. Un élément de mémoire magnéto-optique selon l'une quelconque des revendications précédentes, dans lequel ladite couche d'enregistrement magnéto-optique comprend une pellicule mince en alliage amorphe.

26. Un élément de mémoire magnéto-optique selon la revendication 25 dans lequel ledit alliage amorphe est un alliage d'un métal de terre rare et d'un métal de transition.

27. Un élément de mémoire magnéto-optique selon la revendication 26 dans lequel ledit alliage est GdTbFe.

FIG.1

FIG.2

FIG.3

FIG.4